# EUROPEAN PATENT SPECIFICATION

(11) **EP 3 312 246 B1**
(45) Date of publication and mention of the grant of the patent: **24.07.2019**
(21) Application number: 17192748.6
(22) Date of filing: 22.09.2017
(51) Int. Cl.: C09D 11/037, C09D 11/10, C09D 11/101, B41M 1/00

(54) **INK COMPOSITION COMPRISING PHASE CHANGE TRANSFER ADDITIVE FOR DIGITAL OFFSET PRINTING**
TINTENZUSAMMENSETZUNG MIT PHASENWECHSELÜBERTRAGUNGSADDITIV FÜR DIGITALES OFFSETDRUCKEN
COMPOSITION D'ENCRE COMPRENANT UN ADDITIF DE TRANSFERT À CHANGEMENT DE PHASE POUR IMPRESSION OFFSET NUMÉRIQUE

(30) Priority: 18.10.2016 US 201615296755
(43) Date of publication of application: 25.04.2018
(73) Proprietor: Xerox Corporation, Rochester, NY 14644 (US)
(72) Inventor: BIRAU, Mihaela Maria, Hamilton, Ontario L9C 5J6 (CA); BRETON, Marcel P., Mississauga, Ontario L5K 2S6 (CA); MAYO, James D., Mississauga, Ontario, L4Y 1V1 (CA); MAGDALINIS, Aurelian Valeriu, Newmarket, Ontario, L3X 2X3 (CA); LEE, Jonathan Siu-Chung, Oakville, ON, L6H 4K4 (CA); ABRAHAM, Biby Esther, Mississauga, Ontario L5M 7E2 (CA); CHOPRA, Naveen, Oakville, Ontario, L6H 5W4 (CA); GAGNON, Yvan, Saint-Charles-Borromee, Québec J6E 8H5 (CA)
(74) Representative: Gill Jennings & Every LLP

(56) References cited:
- JP-A- 2002 097 397

## Description

### BACKGROUND

Disclosed herein is an ink composition for use in digital offset printing. Also disclosed is a process of digital offset printing, in embodiments using an anilox delivery system.

Typical lithographic and offset printing techniques utilize plates that are permanently patterned, and are, therefore, useful only when printing a large number of copies of the same image, such as magazines, newspapers, and the like. Variable data digital lithography or digital offset lithographic printing has been developed as a system that uses a non-patterned re-imageable surface, which is initially uniformly coated with a dampening fluid layer. Regions of the dampening fluid are removed by exposure to a focused radiation source (e.g., a laser light source) to form pockets. A temporary pattern in the dampening fluid is thereby formed over the non-patterned re-imageable surface. Ink applied thereover is retained in the pockets formed by the removal of the dampening fluid. The inked surface is then brought into contact with a substrate, such as paper, plastic or metal and the ink transfers from the pockets in the dampening fluid layer to the substrate. The dampening fluid may then be removed, a new uniform layer of dampening fluid applied to the re-imageable surface, and the process repeated.

Digital offset printing systems use offset-type inks that are specifically designed and optimized to be compatible with the materials the ink is in contact with, including the re-imageable surface and the dampening solution as well as with the various subsystems used during the printing process to enable high quality digital printing at high speed.

For example, an inker subsystem may be used to apply a uniform layer of ink over the layer of dampening fluid. The inker subsystem may use an anilox roller to meter the ink onto one or more ink forming rollers that are in contact with the re-imageable surface. The ink used with this subsystem should have a viscosity that is not so high that anilox-take up and delivery to the re-imageable surface is difficult. However, too low of a viscosity, tack and/or poor cohesion may result in the ink crawling out of the ink loader, resulting in unwanted spills, loss of ink and potential contamination of the printer. Accordingly, digital offset inks should have a certain range of viscosity, tack and tack stability to afford sufficient and predictable ink cohesion to enable good transfer properties in and among the various subsystems.

U. S. Patent Application Serial Number 15/262,809, describes in the Abstract thereof an ink composition useful for digital offset printing applications includes a colorant and a high viscosity thickening agent. The ink is formulated to incorporate a gellant into the ink set to help meet the requirement of two different viscosity or temperature pairs at two different stages of the ink delivery process. In lithography imaging a bulk ink is first transferred onto an anilox roll and then onto the imaging cylinder blanket. The first transfer from bulk ink to anilox roll requires the ink to have a low viscosity while the transfer from roll to imaging blanket requires a high viscosity. The addition of the gellant will increase the viscosity difference within the allowable temperature range thus increasing process latitude and robustness.

U. S. Patent Application Serial Number 15/262,871, describes in the Abstract thereof an ink composition useful for digital offset printing applications includes a colorant and a high viscosity thickening agent. The ink is formulated to incorporate polyester viscosity modifier to help meet the requirement of two different viscosity or temperature pairs at two different stages of the process. In digital offset printing a bulk ink is first transferred onto an anilox roll, and then from the anilox roll onto the imaging cylinder blanket. During the bulk ink to anilox roll the disclosed ink has a low viscosity while the transfer from roll to imaging blanket the ink has a higher viscosity. The addition of the polyester viscosity modifier increases the viscosity difference within the allowable temperature range, thus, increasing process latitude and robustness.

Although there is a growing demand expected for digital offset printing to produce white for background labels, tinting purposes or special effects on metallic substrates, for example, many white inks known in the art do not have the necessary transfer properties. Previous formulated white inks containing titanium dioxide (TiO2) pigment, for example, have relatively low tack and poor ink cohesion or higher tack but poorer tack stability over time.

Further, the hiding power (the ability to effectively mask an underlying color) of a white ink image on a substrate is associated with brightness and reflection properties, which are extremely sensitive to the amount of white ink that is transferred. Reduced tack and/or reduced tack stability may thus lead to insufficient coverage of substrates printed using digital offset printing architecture.

Digital offset printing architectures require offset type inks that are specifically designed and optimized to be compatible with the different subsystems, including ink delivery system and imaging system, that enable high quality printing at high speed with no residual.

Digital offset printing inks differ from conventional inks because they must meet demanding rheological requirements imposed by the lithographic printing process while being compatible with system component materials and meeting the functional requirements of subsystem components, including wetting and transfer. Print process studies have demonstrated that higher viscosity is preferred for ink transfer to digital lithography imaging blanket from the inker unit via a roll and yet even higher viscosity is needed to improve transfer to a print substrate. Therefore, there remains a need for digital advanced lithography imaging inks to have increased viscosity latitude to enable excellent ink transfer from the ink loader system at both about 60°C and excellent ink delivery from the anilox roller to the fluorosilicone blanket at temperatures as low as about 20°C.

White ink compositions suitable for digital offset printing architectures are particularly desirable for printing backgrounds as well as for other uses. While white ink is important for digital offset printing needs, it is difficult to make a white ink composition having the desired combination of traits. The ink must transfer well and desirably be fairly opaque. Such opaqueness may require a high pigment concentration, while a high pigment concentration may interfere with desired viscosity characteristics. A desired ink possesses a certain viscosity at room temperature and when heated for transfer.

U. S. Patent Application Serial Number 14/619,820, describes in the Abstract thereof a white ink composition for use in digital offset printing, including a first white colorant including a first plurality of white pigment particles, wherein an average diameter of at least about 40% of the first plurality of white pigment particles is in a range of about 250 nanometers to about 350 nanometers, a second white colorant including a second plurality of white pigment particles, wherein an average diameter of at least about 40% of the second plurality of white pigment particles is in a range of about 350 nanometers to about 550 nanometers, at least one dispersant, at least one component selected from a curable monomer or a curable oligomer, and a photo-initiator. Also provided is a method of digital offset printing using the white ink composition of the present disclosure.

While currently available ink compositions may be suitable for their intended purposes, a need remains for digital offset printing inks, in particular, white digital offset printing inks, having increased viscosity latitude to enable excellent ink transfer from the ink loader system at desired temperatures, for example, about 60°C, and excellent ink delivery from the anilox roller to the flurosilicone blanket at desired temperatures, for example as low as about 20°C. This is achievable to a certain extent with the use of high viscosity polyester acrylate oligomers but these formulations have limited applicability for rough paper applications where thicker transfer films are needed. Alternative materials are required to achieve this goal.

The appropriate components and process aspects of the each of the foregoing U. S. Patents and Patent Publications may be selected for the present disclosure in embodiments thereof. Further, throughout this application, various publications, patents, and published patent applications are referred to by an identifying citation.

### SUMMARY

Described is an ink composition for use in digital offset printing, comprising a white colorant, a translucent colorant, or a combination thereof; wherein the white colorant, translucent colorant, or combination thereof is present in an amount of at least 50 percent by weight based on the total weight of the ink composition; at least one component selected from the group consisting of a curable monomer and a curable oligomer; at least one phase change agent, wherein the at least one phase change agent comprises an ester-terminated polyamide gellant; an optional dispersant; and an optional photoinitiator.

Also described is a process of digital offset printing, the method comprising applying a composition as provided herein onto a re-imageable imaging member surface at an ink take up temperature, the re-imageable imaging member having dampening fluid disposed thereon; forming an ink image; transferring the ink image from the re-imageable surface of the imaging member to a printable substrate at an ink transfer temperature; wherein the ink composition comprises: a white colorant, a translucent colorant, or a combination thereof; wherein the colorant is present in an amount of at least 50 percent by weight based on the total weight of the ink composition; at least one component selected from the group consisting of a curable monomer and a curable oligomer; at least one phase change agent, wherein the phase change agent has the characteristic of providing the ink composition with a first lower viscosity at an ink take up temperature and a second higher viscosity at an ink transfer temperature wherein the ink take up temperature is higher than the ink transfer temperature, and wherein the at least one phase change agent comprises an ester-terminated polyamide gellant; an optional dispersant; an optional photoinitiator.

### BRIEF DESCRIPTION OF THE DRAWINGS

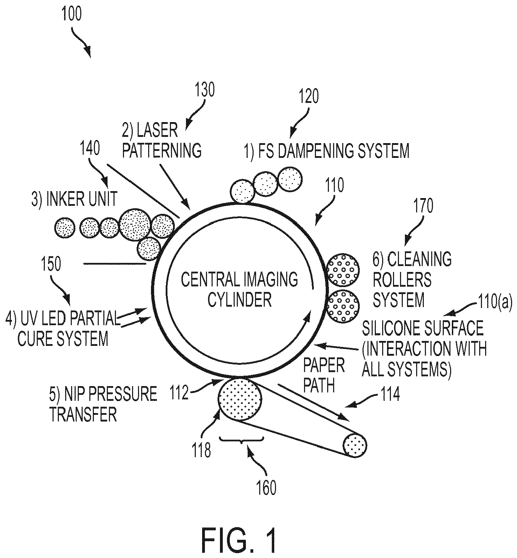

Figure 1 illustrates a schematic representation of a related art ink-based variable image digital printing system with which the white ink compositions according to this disclosure may be used.

### DETAILED DESCRIPTION

An ink composition for use in digital offset printing is described, comprising a white colorant, a translucent colorant, or a combination thereof; wherein the colorant is present in an amount of at least 50 percent by weight based on the total weight of the ink composition; at least one component selected from the group consisting of a curable monomer and a curable oligomer; at least one phase change agent; an optional dispersant; and an optional photoinitiator. The phase change agent has the characteristic of providing the ink composition with a first lower viscosity at an ink take up temperature and a second higher viscosity at an ink transfer temperature wherein the ink take up temperature is higher than the ink transfer temperature. According to the invention, the at least one phase change agent comprises an ester-terminated polyamide gellant.

The term "phase change agent" or "phase change additive" as used herein includes any suitable compound or component that induces a phase change such as a temperature induced phase change rheological profile. In embodiments, a phase change agent herein includes a gelator or gellant that induces a phase change transition at a temperature below the gel point, for example, from a first viscosity to a second viscosity. In embodiments, the phase change agent herein provides the ink composition with a relatively lower viscosity at an ink take up temperature and a higher viscosity at an ink transfer temperature as a result of the formation of a gel like structure at lower temperature, wherein the ink take up temperature is higher than the ink transfer temperature. The ink upon cooling from liquid phase forms a gel below the gel point and upon further cooling can further solidify or form a stronger gel depending on the ink formulation.

Generally, a phase-change agent is a material that exhibits a non-linear change in viscosity as a function of temperature. Typically, a phase-change agent will demonstrate a 10E+2 or 10E+3 change in viscosity (that is, 100x or 1000x increase) at the phase-change temperature. As described in U. S. Patent 8,603,612, which is hereby incorporated by reference herein in its entirety, gellants function to dramatically increase the viscosity of the ink vehicle and ink composition within a desired temperature range. In particular, the gellant forms a semi-solid gel in the ink vehicle at temperatures below the specific temperature at which the ink composition is jetted. The semi-solid gel phase is a physical gel that exists as a dynamic equilibrium comprised of one or more solid gellant molecules and a liquid solvent. The semi-solid gel phase is a dynamic networked assembly of molecular components held together by non-covalent bonding interactions such as hydrogen bonding, Van der Waals interactions, aromatic non-bonding interactions, ionic or coordination bonding, London dispersion forces, and the like; which upon stimulation by physical forces such as temperature or mechanical agitation or chemical forces such as pH or ionic strength, can reversibly transition from liquid to semi-solid state at the macroscopic level. The ink compositions exhibit a thermally reversible transition between the semi-solid gel state and the liquid state when the temperature is varied above or below the gel-phase transition. This reversible cycle of transitioning between semi-solid gel phase and liquid phase can be repeated many times in the ink composition. Mixtures of one or more gellants may be used to effect the phase-change transition.

As further described in U. S. Patent 8,603,612, the phase change nature of the gellant may be used to cause a rapid viscosity increase in the jetted ink composition following jetting of the ink to the substrate. In particular, jetted ink droplets may be pinned into position on a receiving substrate with a cooler temperature than the ink-jetting temperature of the ink composition through the action of a phase-change transition. The temperature at which the ink composition forms the gel state is any temperature below the jetting temperature of the ink composition, for example any temperature that is about 10°C or more below the jetting temperature of the ink composition. There is a rapid and large increase in ink viscosity upon cooling from the jetting temperature at which the ink composition is in a liquid state, to the gel transition temperature, at which the ink composition converts to the gel state. The ink composition of some embodiments may show at least a 10^{2.5}-fold increase in viscosity. Suitable gellants may gel the monomers/oligomers in the ink vehicle quickly and reversibly, and demonstrate a narrow phase-change transition, for example within a temperature range of about 20°C to about 85°C. The gel state of exemplary ink compositions should exhibit a minimum of 10^{2.5} mPa·s, such as 10³ mPa·s, increase in viscosity at substrate temperatures, for instance, from about 30°C to about 70°C, compared to the viscosity at the jetting temperature. In some embodiments, the gellant-containing ink compositions rapidly increase in viscosity within 5°C to 10°C below the jetting temperature and ultimately reach a viscosity above 10⁴ times the jetting viscosity, for example about 10⁵ times the jetting viscosity.

The present embodiments include incorporating a phase change agent or additive, for example, an ester terminated polyamide gelator, into a white DALI (Digital Architecture for Lithographic Inks) ink to enable a relatively lower viscosity at an ink take up temperature, in embodiments, a temperature at which the ink is taken up by the anilox roll, in embodiments, for example at about 60 °C, and a higher viscosity at an ink transfer temperature, in embodiments, at a temperature at which the ink is transferred from the blanket to the paper, in embodiments, for example, at about 18 °C, than is achievable with prior known traditional DALI inks. The increased difference between the viscosities at the different temperatures enables, in combination, both efficient ink delivery and efficient image transfer from the blanket. The ink composition herein further enables use of a high colorant concentration, in embodiments a colorant or pigment concentration of greater than 50 percent, in embodiments, greater than 60 percent, by weight based on the total weight of the ink composition, while maintaining desired characteristics of desired viscosity at room temperature and desired viscosity at heated temperature for ink transfer. The ink compositions of the present embodiments provide, in combination, fairly opaque inks, that is, containing greater than 50 or greater than 60 percent colorant, desired viscosity at both room temperature and ink transfer temperature. In embodiments, a desired transfer viscosity is from about 10,000 to about 20,000 centipoise at an ink take up temperature, such as from about 45 °C to about 80 °C, and a viscosity of about 10⁶ or above when cooled to room temperature, such as about 25 °C. In embodiments including translucent colorants, alone or in combination with other pigment, such as titanium dioxide, the ink compositions herein provide, in combination, fairly opaque inks, that is, containing greater than 50 percent, or greater than 60 percent colorant, by weight based upon the total weight of the ink composition, desired viscosity at both room temperature and ink transfer temperature.

The ink compositions can be used for any suitable or desired purpose. In embodiments, the ink compositions herein are particularly suitable for DALI printing, in embodiments, for printing labels and undercoats using DALI printing, and especially white ink compositions so used. In embodiments, a white ink herein is particularly suitable for use as an undercoat in a printing process. The white DALI ink herein containing the phase change additive, an ester terminated polyamide gelator, provides improved transfer performance over a similar white ink without the phase change additive.

In certain embodiments, the white ink compositions herein comprise a tetrafunctional polyester acrylate oligomer, a propoxylated trimethylolpropane triacrylate monomer, an optional additive or additives wholly compatible with higher functionality monomers (n = 4, 5, 6, etc.), a white pigment, a translucent pigment, or a combination of white and translucent pigments, single or mixed system free radical photoinitiators, organoclay or silica fillers, thermal and in-can stabilizers, and a new component, demonstrated for the first time to be suitable for a white ink containing more than 50% by weight of colorant, in embodiments more than 50% by weight of pigment, comprising a phase change agent, in embodiments, ester-terminated polyamide gellant (ETPA).

In embodiments, a phase change agent or non-curable gelator, an ester-terminated polyamide gellant (ETPA), is included in a digital offset printing ink composition to enable the ink composition to meet the requirements for the digital offset printing cycle, wherein the ink compositions possess:
1) a relatively low viscosity at a desired temperature, in embodiments, at a temperature of from about 45 °C to about 80 °C, and relatively higher shear to allow the continual and uniform loading of ink from the ink loader system to the anilox roller; and
2) a relatively high viscosity at a desired temperature, in embodiments at a temperature of from about 18° to about 30°C, and relatively lower shear rate. These conditions and combination of ink characteristics allow improved take-up of ink from the anilox roller to the blanket resulting in better imaging density uniformity, better printed dot circularity and better transfer from the blanket to the receiving substrate, such as paper.

The concepts and formulations of radiation curable inks herein, in embodiments, radiation curable digital inks, such as DALI inks, incorporate a phase change agent, in embodiments, an organic-based gellant or gelator. As described in Figure 1, it is highly advantageous to ensure inking uniformity and delivery of the ink from the ink loader system (or inker unit) that the ink has relatively low viscosity within a temperature range of, in embodiments, from about 45 to about 80 °C, such as from about 50 to about 70 °C, such as from about 55 to about 65 °C, such as about 60 °C, at shear rates corresponding to the equivalent angular frequencies from about 50 to about 200 rad/s such as about 100 rad/s. It is also highly advantageous to ensure a high degree of ink transfer from the anilox roller to the blanket such that the ink has relatively high viscosity within a temperature range of, in embodiments, from about 18 to about 35 °C, such as from about 18 to about 30 °C, such as about 25 °C, at shear rates corresponding to the equivalent angular frequencies from about 0.5 to about 2 rad/s such as about 1 rad/s.

In embodiments, the ink composition has a first viscosity of from about 3,000 to about 90,000 centipoise at an ink take up temperature of from about 45 °C to about 80 °C; and the ink composition has a second viscosity of from about 100,000 to about 2,000,000 centipoise at an ink transfer temperature of from about 18 °C to about 30 °C.

In embodiments, the ink composition has a first viscosity of from about 3,000 to about 90,000 centipoise at an ink take up temperature of from about 45 °C to about 80 °C and a relatively higher shear rate of from about 50 rad/s to about 200 rad/s; and the ink composition has a second viscosity of from about 100,000 to about 2,000,000 centipoise at an ink transfer temperature of from about 18 °C to about 30 °C and a relatively lower angular frequency of from about 0.5 rad/s to about 2 rad/s.

In embodiments, compositions of comparative DALI ink comprise: acrylate oligomer, pigment, photoinitiator, acrylate monomer, dispersant, and additives. DALI ink requirements necessitate low odour, low migration components appropriate according to safety considerations, and may be formulated to be appropriate for potential food contact (direct and indirect) applications.

In certain embodiments, the ink compositions herein comprise phase change additives, such as ETPA (ester-terminated polyamide) gelators, that can be formulated to achieve relatively lower viscosity at about 60 °C and relatively higher viscosity at about 18 °C. In some embodiments, the target transfer rheology at high and low temperature is achieved in the narrowest temperature range, that is, from about 30° to about 60°C, such as from about 35°C to about 50°C, such as from about 40°C to about 45°C.

### Phase Change Agent.

According to the invention, the at least one phase change agent comprised in the ink composition comprises an ester-terminated polyamide gellant. Any suitable or desired phase change agent or additive can be selected for the ink compositions herein provided that the phase change agent is compatible, such as miscible, with the phase change vehicle components. In embodiments, the phase change agent is a phase change agent or non-curable gelator (gellant) which enables the ink composition to attain the characteristics of possessing a relatively low viscosity at a higher temperature and relatively higher shear rate to enable continual and uniform loading of ink from the ink roller system to the anilox and in combination possessing a relatively high viscosity at a lower temperature and relatively lower shear rate. The use of a non-curable gellant may be advantageous in providing increased flexibility to the ink image or film after curing.

In embodiments, the phase change agent is a low molecular weight amide gellant as described in U. S. Patent 8,882,256. In embodiments, the gellant is a compound of the formula 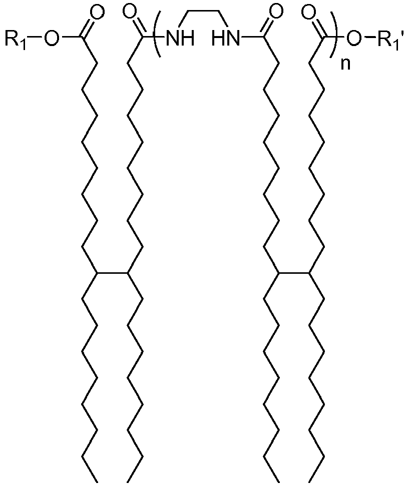 where n is about 0 to about 20, about 0 to about 15, or about 0 to about 10, and where R1 and R1' each, independently of the other, is a suitable end-capping group (e.g., an alcohol, aromatic, or aromatic alcohol group). In some embodiments, n is 1, 2, 3, 4, 5, 6, 7, 8, 9, 10, 11, 12, 13, 14, 15, 16, 17, 18, 19, or 20. In embodiments, the amide gellant of the present embodiments has a weight average molecular weight (Mw) of from about 800 to about 2,500, or from about 900 to about 2,400, or from about 1,000 to about 2,300. In embodiments, the amide gellant of the present embodiments has a number average molecular weight (Mn) of from about 500 to about 2,500, or from about 700 to about 2,300, or from about 900 to about 1,700.

In embodiments, R1 and R1' can be the same or different, and wherein R1 and R1' are each, independently of the other, selected from the group consisting of 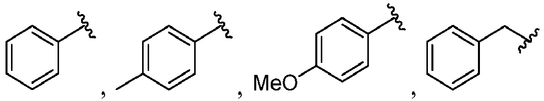 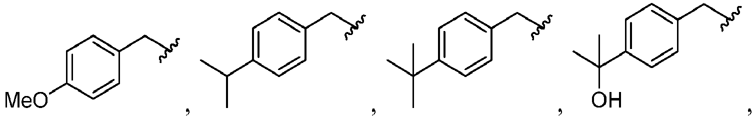 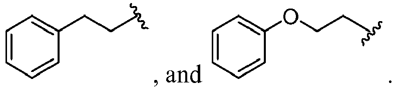 wherein the wavy line represents the attachment to the main structure.

The gellant can also be selected from those described in U. S. Patent 7,632,546.

In certain embodiments, the phase change agent is an ester-terminated polyamide gellant (ETPA) (Example 1 herein) of the formula 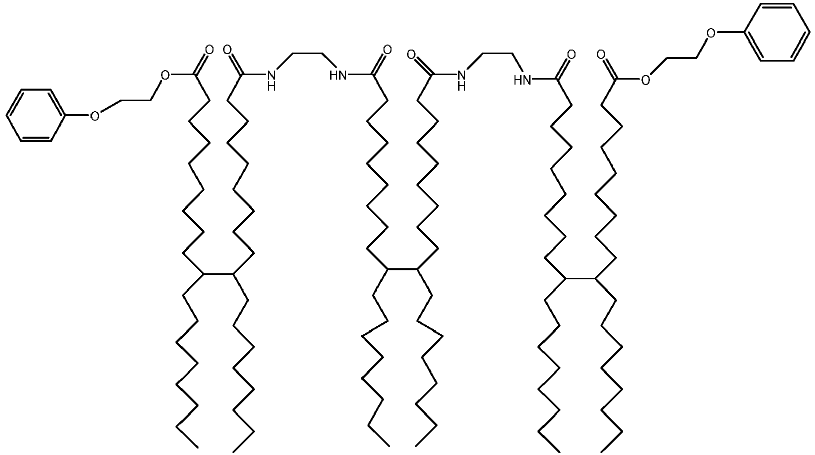 in embodiments, having an average of 3 hydrophobic tails. Chemical Formula: C₁₂₈H₂₃₄N4O10. Molecular Weight: 1969.25.

In certain other embodiments, the phase change agent is an ester-terminated polyamide gellant (ETPA) (Example 2 herein) of the formula 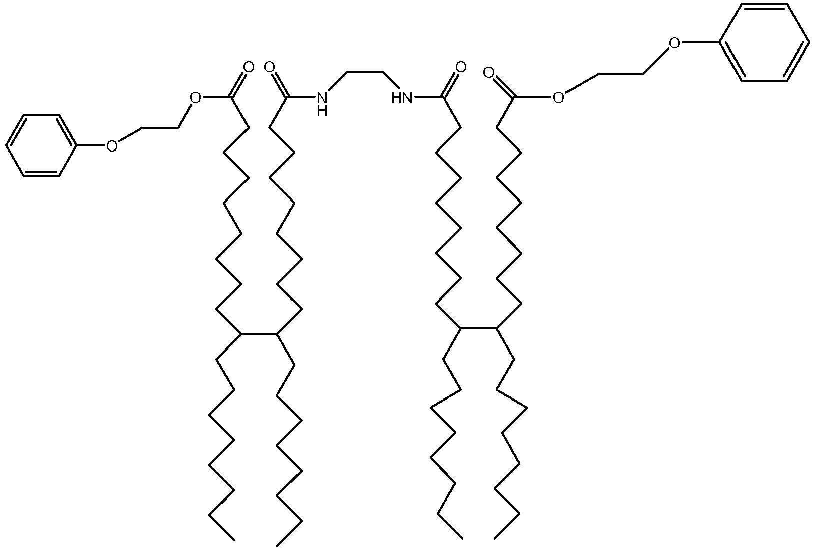 in embodiments, having an average of 2 hydrophobic dimer tails. Chemical Formula: C₈₀H₁₆₂N₂O₈. Molecular Weight: 1398.24.

Commercially available gelators can also be selected in embodiments herein including, for example, CrystaSense™ LP2 and LP3 available from Croda.

In addition to accounting for the above considerations in formulation, the phase change agent is selected to be compatible with all aspects of the print performance. For example, ink delivery, interaction with fountain fluid and imaging on the blanket substrate, and transfer to a wide latitude of substrates (papers, plastic substrates). The end result is a digital print possessing offset lithography image quality with good curing highlighted by its resistance to solvent tests, such as MEK (methylethyl ketone) rub tests.

The gellant compounds as disclosed herein can be prepared by any desired or effective method.

For example, in embodiments, gellants can be prepared as described in U. S. Patent 7,259,275, entitled "Method for Preparing Curable Amide Gellant Compounds," with the named inventors Jennifer L. Belelie, Adela Goredema, Peter G. Odell, and Eniko Toma, and the disclosure of which is totally incorporated herein by reference, which describes a process for preparing a compound of the formula 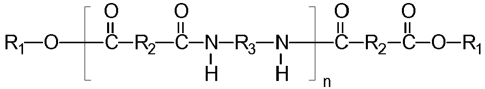 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising: (a) reacting a diacid of the formula

HOOC-R₂-COOH

with a diamine of the formula 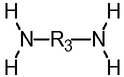 in the absence of a solvent while removing water from the reaction mixture to form an acid-terminated oligoamide intermediate; and (b) reacting the acid-terminated oligoamide intermediate with a monoalcohol of the formula

R₁-OH

in the presence of a coupling agent and a catalyst to form the product.

In embodiments, the amide gellant compounds of the present embodiments are made from a two-step process. In the first step, an amide gellant precursor (organoamide) is synthesized by using two equivalents of Pripol™ (available from Croda Inc. (Edison, New Jersey)) and one equivalent of ethylenediamine (EDA), as shown in the scheme below. 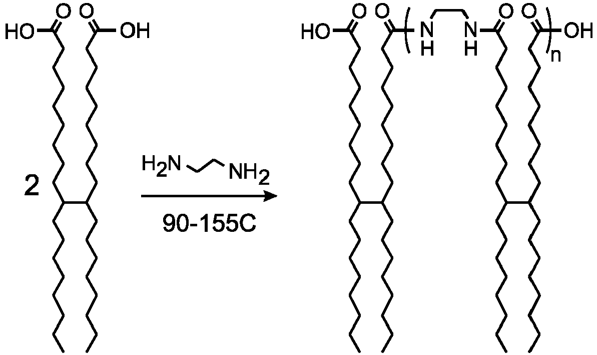 where n may be 0 to about 20, about 0 to about 15, or about 0 to about 10.

In the second step, the organoamide is end-capped with various end cap alcohols to make the esters. During the preparation of the organoamide, oligomers or x-mers of the ester-terminated polyamide gellant are created (end-capping to make the esters in the final gellant does not change the oligomer distribution).

From the two-step process, there is achieved gellant compositions that comprise a blend of oligomers or x-mers of an ester-terminated polyamide gellant disclosed herein. The blend oligomers or x-mers may include monomers or unimers, thus as used herein, the term "oligomer" or "x-mer" includes monomers or unimers in addition to molecules that consist of a plurality of monomers such as dimers, trimers, tetramers, pentamers, etc. The oligomeric amide gellant composition comprise discrete ranges of oligomers (also referred to as "x-mers") that provide optimal gel point and room temperature viscosity to facilitate stable jetting and controlled showthrough of the printed inks.

In some embodiments, the gellant oligomer mixture composition comprises a blend of oligomers made up of two or more (e.g. 2, 3, 4, 5, 6, 7, 8, 9, 10, 11, 12, or more) of the following in any combination or mixture: a unimer, a dimer, a trimer, a tetramer, a pentamer, a hexamer, a heptamer, a octamer, a nonamer, a decamer, an undecamer, and a dodecamer.

In some embodiments, the proportion of each oligomer in the oligomeric mixture is equimolar. In some embodiments, the oligomeric mixture comprises more than one and up to 20 x-mers, wherein x is from about 1 to about 12, and the x-mer may be as described above, including a unimer, dimer, trimer and the like as listed above up to and including a dodecamer. The proportion of any of the x-mers present in the oligomeric mixture may be from about 0.5 percent to about 50 percent, between about 10 percent to about 50 percent, and between about 20 percent to about 50 percent.

By controlling the amount of EDA used in the first step, for example, reducing the amount of EDA used relative to the amount of Pripol™, the distribution can be shifted to create larger proportions of the lower order x-mers (smaller values of repeat units n). Typically, the amount of EDA relative to the amount of Pripol™ is expressed as an EDA:Pripol™ mole ratio. In embodiments, the EDA:Pripol™ ratio used in synthesizing the amide gellant precursor is modified by reducing from the original EDA:Pripol™ ratio of 1.1:2 down to from about 0.9:2 to about 0.05:2, or to from about 0.8:2 to about 0.10:2, or to from about 0.75:2 to about 0.25:2. In such embodiments, the composition of the low molecular weight amide gellant mixture as an x-mer composition that has higher proportions of the n=0 (unimer), n=1 (dimer), n=2 (trimer) species. In specific embodiments the low molecular weight amide gellant contains between 30-60% of the n=1 (dimer) species, and the sum of n=0 (unimer), n=1 (dimer), and n=2 (trimer) comprises at least 80% of the total composition, as measured by Matrix-assisted laser desorption/ionisation-time of flight (**MALDI-TOF**) mass spectrometry.

### Colorant.

Any desired or effective colorant can be employed in the phase change ink compositions herein, including dyes, pigments, mixtures thereof, and the like, provided that the colorant can be dissolved or dispersed in the ink vehicle. In embodiments, the colorant is a white colorant, a translucent colorant, or a combination thereof. In embodiments, the colorant is a white colorant. In certain embodiments, the colorant is a white pigment.

In embodiments, the ink compositions herein can optionally include small amounts of non-white pigment or pigments, for example, if a non-white background print is desired. Any suitable or desired non-white, colored pigment, can be selected provided that the non-white pigment is compatible with the white pigment and the phase change ink vehicle.

If included, the non-white pigment is included in a relatively small amount based upon the total amount of pigment including white colorant in order to fall within the total amount of colorant as described herein below. That is, if the total amount of pigment is from about 45 percent to about 65 percent, by weight, based upon the total weight of the ink composition, the non-white pigment may be present in a small amount, such as about 1 percent by weight, and the white pigment is present in amount of from about 44 percent to about 64 percent by weight based upon the total weight of the ink composition. For example, in embodiments, the pigment loading for a cyan, magenta, yellow, green, or carbon black pigment is about 0.5 percent by weight based upon the total weight of the ink composition.

In embodiments, the colorant is an inorganic colorant, a compatible organic colorant, or a combination thereof. In certain embodiments, any desired or effective white colorant, translucent white colorant, or colored pigment or colorant can be selected including pigments, mixtures of pigments, mixtures of pigments and dyes and the like, provided that the colorant may be dissolved or dispersed in at least one curable monomer or at least one curable oligomer and at least one dispersant. In specific embodiments, the colorant is a pigment.

In embodiments, the colorant is selected from the group consisting of inorganic pigments, opaque white pigment, translucent white pigment, translucent colored pigment, and combinations thereof.

In certain embodiments herein, the white colorant is a white pigment selected from titanium dioxide, zinc oxide, zinc sulfide, calcium carbonate, clay, lithopone (a mixture of barium sulphate and zinc sulfide), or mixtures or combinations thereof. In a specific embodiment, the white colorant is a titanium dioxide pigment. In a more specific embodiment, the white colorant is the form of TiO₂ known as rutile. Commercial grades of TiO₂ are designed with additional artifacts to enhance optical properties such as tint strength and undertone and to promote dispersion stability. The pigment features include size, degree of coating with silica and or alumina, as well as optional organic materials. Illustrative examples of suitable titanium oxide pigments include pigments selected from Ti-Pure® R-108, Ti-Pure® R-104, Ti-Pure® R-103, Ti-Pure® R-102, Ti-Pure® R-700, Ti-Pure® R-706, Ti-Pure® R-760, Ti-Pure® R-900, Ti-Pure® R-960, Ti-Pure® R-3910, available from DuPont Titanium Technologies, Wilmington, DE, 2020®, 2063®, 2090®, 2310®, 2450® available from Kronos Inc., Cranbury, NJ, and Tiona® 595, Tiona® 568, Tiona® RCL-6, Tiona® RCL-9, and Tiona® 696 available from Millennium Inorganic Chemicals, Hunt Valley, MD.

In embodiments, the phrase "white pigment particles" refers to particles of substances that when incorporated into an ink, impart a white color to a feature printed using the white ink containing the white pigment particles. The term excludes the presence of any colored pigment including colored pigment particles. Examples of suitable white pigment particles include pigment particles of titanium dioxide, zinc oxide, barium carbonate, silicon dioxide, zinc sulfide, barium sulfate, calcium sulfate, calcium carbonate, antimony trioxide, aluminum hydroxide, kaolin, and mixtures of two or more of the above.

In embodiments, the ink composition further comprises a non-white colorant, wherein the non-white colorant is an inorganic metal oxide pigment. In embodiments, the inorganic metal oxide pigment is a zinc oxide/inorganic metal oxide pigment such as mixtures of zinc oxide with, for example, cobalt oxide pigment, known as zinc oxide green and zinc oxide turquoise. In embodiments, the inorganic metal oxide pigment is selected from the group consisting of zinc oxide/cobalt oxide pigment, zinc oxide green, zinc oxide turquoise, and combinations thereof.

In embodiments, the metal oxide pigment is present in an amount of less than 5 percent by weight based on the total weight of the ink composition. In embodiments, the metal oxide pigment is present in an amount of from about 0.001 percent to less than 5 percent, or 0.01 percent to less than 5 percent, or 0.1 percent to less than 5 percent, by weight based on the total weight of the ink composition.

In certain embodiments, the colorant herein comprises one or more white pigments of varying degree of opacity including, for example, titanium dioxide type pigments, lithopone type pigments (for example, C.I. Pigment White 5), zinc oxide whites, which may or may not themselves be slightly colored, and other inorganic white pigments. In embodiments, the pigment herein is selected from the group consisting of titanium dioxide pigments, lithopone pigments, zinc oxide pigments, and combinations thereof.

In embodiments, the ink composition herein comprises a white pigment as a main colorant and, optionally, one or more additional pigments. In embodiments, the ink composition is a background ink, meaning an ink that when printed provides an ink layer, in embodiments a white ink layer, wherein an image can be printed on top of the white ink layer. In embodiments, the white ink background layer can be "opaque" (that is, the substrate does not show through) or "transparent" (that is, the substrate shows through the print layer). The opacity can be achieved by modifying the pigment loading in the ink or by printing several layers on top of each other. To achieve transparency, less pigment can be loaded in the ink or the ink rheology can be selected such as to allow a thinner layer on the substrate. In embodiments, the ink composition can contain two or more colorants comprising a selected ratio of high to low opacity colorants, in embodiments, a selected ratio of high to low opacity pigments.

In embodiments, one or more low opacity pigments can be selected. The low opacity pigment can be white or non-white. In embodiments, a non-white low opacity pigment can be combined with one or more additional colorants to provide a white ink composition (that is, an ink composition that prints a white image or layer).

In embodiments, transparent pigments produce bright, luminous, jewel-like color blends, while opaque pigments give a duller, cloudier look.

In embodiments, the low opacity pigment is selected from the group consisting of brilliant white pigment Lithopone B301, Cobalt green, sometimes known as Rinman's green or Zinc Green, a translucent green pigment, and combinations thereof.

In embodiments, the high opacity pigment is selected from the group consisting of titanium dioxide pigments, natural titanium dioxide pigments, synthesized titanium dioxide pigments, and combinations thereof.

With respect to translucency, see, for example, Wikipedia, the online encyclopedia, at https: //en.wikipedia.org/wiki/Transparency_and_translucency. In part, this article describes "In the field of optics, transparency (also called pellucidity or diaphaneity) is the physical property of allowing light to pass through the material without being scattered. On a macroscopic scale (one where the dimensions investigated are much, much larger than the wavelength of the photons in question), the photons can be said to follow Snell's Law. Translucency (also called translucence or translucidity) is a super-set of transparency: it allows light to pass through, but does not necessarily (again, on the macroscopic scale) follow Snell's law; the photons can be scattered at either of the two interfaces where there is a change in index of refraction, or internally. In other words, a translucent medium allows the transport of light while a transparent medium not only allows the transport of light but allows for image formation. The opposite property of translucency is opacity. Transparent materials appear clear, with the overall appearance of one color, or any combination leading up to a brilliant spectrum of every color.

When light encounters a material, it can interact with it in several different ways. These interactions depend on the wavelength of the light and the nature of the material. Photons interact with an object by some combination of reflection, absorption and transmission. Some materials, such as plate glass and clean water, transmit much of the light that falls on them and reflect little of it; such materials are called optically transparent. Many liquids and aqueous solutions are highly transparent. Absence of structural defects (voids, cracks, etc.) and molecular structure of most liquids are mostly responsible for excellent optical transmission.

Materials which do not transmit light are called opaque. Many such substances have a chemical composition which includes what are referred to as absorption centers. Many substances are selective in their absorption of white light frequencies. They absorb certain portions of the visible spectrum while reflecting others. The frequencies of the spectrum which are not absorbed are either reflected back or transmitted for our physical observation. This is what gives rise to color. The attenuation of light of all frequencies and wavelengths is due to the combined mechanisms of absorption and scattering.[1]"

In embodiments, the translucent colorant is selected from the group consisting of brilliant white pigment Lithopone B301, Cobalt green, sometimes known as Rinman's green or Zinc Green, a translucent green pigment, and combinations thereof.

In certain embodiments, the colorant is a white pigment.

The white colorant can have any suitable or desired particle size. In embodiments, pigments selected herein can have a volume average particle size (diameter) of from about 150 to about 800 nanometers, or from about 150 to about 450 nanometers, or from about 200 to about 300 nanometers. In one embodiment, the white colorant is a titanium dioxide pigment having a particle size of from about 200 to about 300 nanometers.

The colorant is present in the ink in any desired or effective amount. In embodiments, the ink compositions herein comprise a high concentration of colorant, in embodiments, pigment. In embodiments, the colorant is present in an amount of at least about 50 percent to no more than about 85 percent, or at least about 50 percent to no more than about 65 percent, or at least about 60 percent to no more than about 65 percent, or about 65 percent, by weight, based upon the total weight of the ink composition. In certain embodiments, the colorant is present in an amount of greater than 50 percent to no more than about 85 percent, or greater than 50 percent to no more than about 65 percent, or at least about 60 percent to no more than about 65 percent, by weight, based upon the total weight of the ink composition. When more than one colorant is present, the total amount of colorant in the ink composition is at least 50 percent, or greater than 50 percent, or at least about 60 percent, to about 85 percent, or to about 65 percent, as recited herein, based on the total weight of the ink composition.

In certain embodiments, the colorant is a white colorant present in an amount of greater than 50 percent by weight to about 85 percent by weight, or at least about 60 percent to about 85 percent by weight, or at least about 65 percent to about 85 percent by weight, based upon the total weight of the ink composition.

In one embodiment, the white colorant is a titanium dioxide pigment present in the ink in an amount of at least about 50 percent by weight based upon the total weight of the ink, or from at least about 60 percent by weight based upon the total weight of the ink composition. In embodiments, the ink compositions herein comprise a white colorant present in an amount of from at least about 45 percent to about 65 percent, or from at least about 50 percent to about 65 percent, or from at least about 55 percent to about 65 percent, by weight, based upon the total weight of the ink composition. In other embodiments, the ink compositions herein comprise a white colorant present in an amount of from about at least about 45 percent to about 55 percent, or from at least about 50 percent to about 55 percent, by weight based upon the total weight of the ink composition.

In other embodiments, the ink compositions herein contain a translucent colorant present in an amount of from at least about 45 percent to about 65 percent, or from at least about 50 percent to about 65 percent, or from at least about 55 percent to about 65 percent, by weight, based upon the total weight of the ink composition. In other embodiments, the ink compositions herein comprise a translucent colorant present in an amount of from about at least about 45 percent to about 55 percent, or from at least about 50 percent to about 55 percent, by weight based upon the total weight of the ink composition.

### Dispersant.

In some embodiments, the white colorant is dispersed in a suitable dispersant. In embodiments, suitable dispersants include copolymers and block copolymers containing pigment affinic groups, such as amines, esters, alcohols and carboxylic acids and salts thereof. Illustrative examples of suitable dispersants include dispersants selected from Efka® 4008, Efka® 4009, Efka® 4047, Efka® 4520, Efka® 4010, Efka® 4015, Efka® 4020, Efka® 4050, Efka® 4055, Efka® 4080, Efka® 4300, Efka® 4330, Efka® 4400, Efka® 4401, Efka® 4403, Efka® 4406, Efka® 4800, all available from BASF, Charlotte, North Carolina., Disperbyk® 101, Disperbyk® 102, Disperbyk® 107, Disperbyk® 108, Disperbyk® 109, Disperbyk® 110, Disperbyk® 111, Disperbyk® 112, Disperbyk® 115, Disperbyk® 162, Disperbyk® 163, Disperbyk® 164, Disperbyk® 2001, all available from BYK Additives & Instruments, Wesel Germany, Solsperse® 24000 SC/GR, Solsperse® 26000, Solsperse® 32000, Solsperse® 36000, Solsperse® 39000, Solsperse® 41000, Solsperse® 71000 all available from Lubrizol Advanced Materials, Inc. Cleveland, Ohio or mixtures or combinations thereof.

In specific embodiments, the dispersant includes K-Sperse® XDA-504 from King Industries, Norfolk, Connecticut. The dispersant may be present in the white ink composition of the instant disclosure in an amount of about 0% to about 30 % by weight, or from about 0% to about 20% by weight, or from about 1% to about 10% by weight, or from about 6% to about 10% by weight, based upon the total weight of the white ink composition.

In certain embodiments, the colorant and the dispersant together are present in the ink composition in an amount to about 85 percent by weight based on the total weight of the ink composition.

### Monomers, Oligomers.

In some embodiments, the ink composition of the present disclosure includes further components such as a suitable curable monomer. Examples of suitable materials include radically curable monomer compounds, such as acrylate and methacrylate monomer compounds. Specific examples of acrylate and methacrylate monomers include (but are not limited to) isobornyl acrylate, isobornyl methacrylate, lauryl acrylate, lauryl methacrylate, isodecylacrylate, isodecylmethacrylate, caprolactone acrylate, 2-phenoxyethyl acrylate, isooctylacrylate, isooctylmethacrylate, butyl acrylate, alkoxylated lauryl acrylate, ethoxylated nonyl phenol acrylate, ethoxylated nonyl phenol methacrylate, ethoxylated hydroxyethyl methacrylate, methoxy polyethylene glycol monoacrylate, methoxy polyethylene glycol monomethacrylate, tetrahydrofurfuryl methacrylate, tetrahydrofurfuryl methacrylate and the like, as well as mixtures or combinations thereof.

In embodiments, the at least one component selected from the group consisting of a curable monomer and a curable oligomer in the ink composition herein is a component selected from the group consisting of acrylated polyesters, acrylated polyethers, acrylated epoxies, urethane acrylates, and pentaerythritol tetraacrylate, and combinations thereof.

In specific embodiments, propoxylated trimethylolpropane triacrylate such as SR501 from Sartomer Co. is used. The monomers may be present in the white ink composition of the present disclosure in an amount from about 0% to about 50% by weight, such as about 1% to about 30% by weight, such as about 5% to about 30% by weight, such as about 5% to about 10% by weight, based upon the total weight of the present white ink composition.

In some embodiments, the ink composition of the present disclosure includes a curable oligomer. Suitable curable oligomers include, but are not limited to acrylated polyesters, acrylated polyethers, acrylated epoxies, urethane acrylates, and pentaerythritol tetraacrylate. Specific examples of suitable acrylated oligomers include, but are not limited to, acrylated polyester oligomers, such as CN2255®, CN2256®, CN294E®, CN2282® (Sartomer Co.), and the like, acrylated urethane oligomers, acrylated epoxy oligomers, such as CN2204®, CN110® (Sartomer Co.) and the like; and mixtures and combinations thereof. In embodiments, the at least one component selected from the group consisting of a curable monomer and a curable oligomer in the ink composition herein is a component selected from the group consisting of a tetrafunctional polyester acrylate oligomer, a propoxylated trimethylolpropane triacrylate monomer, and combinations thereof. The oligomers may be present in the white ink composition of the present disclosure in an amount of about 0% to about 50% by weight, such as about 1% to about 30% by weight, such as about 5% to about 30% by weight, based upon the total weight of the present white ink composition.

In certain embodiments, the inks described herein may include the following components: (a) radiation-curable water-dilutable monomer compounds, including mono-, di-, and tri-functional water-dilutable acrylate monomers, oligomers; (b) dispersants; (c) white or translucent colorant as described herein; (d) clays or other additives; (e) initiators; (f) additional curable compounds including monomers, oligomers, including oligomers from Sartomer USA, LLC or Cytec Industries, Inc., prepolymers, polymers; (g) additives including surfactants, free-radical scavengers, and the like; (h) thermal stabilizers.

In embodiments, the water-diluted curable components may include any water-dilutable acrylate or methacrylate monomer compound(s) suitable for use as a phase change ink carrier or ink vehicle that may be water dilutable, with an addition of water being available to adjust and/or enhance background performance for use in the variable digital data lithographic printing architecture. In embodiments, the water-diluted curable component is a water-dilutable functional acrylate monomer, a methacrylate monomer, a multifunctional acrylate monomer, a multifunctional methacrylate monomer, or a mixture or combination thereof. Exemplary acrylates may include acrylate monomers or polymers such as polyester acrylates Sartomer CN294E, Sartomer CD-501, Sartomer CN9014, Sartomer CN2282 and Sartomer CN2256. In embodiments, a mixture of the components is water-dilutable.

In embodiments, further examples of curable monomers and diluting acrylates which can be used in the ink compositions as vehicles may include Trimethylolpropane triacrylate; SR-492, SR-501, SR-444, SR-454, SR-499, SR-502, SR-9035 and SR-415 from Sartomer; EBECRYL® 853 and EBECRYL® 5500 from Allnex. Trimethylolpropane triacrylate has a refractive index of 1.474, a specific gravity of 1.06 g/cm³, an APHA Color of less than 300 and a viscosity range of 80 to 120 cps at 25°C. Sartomer SR-492 is a three mole propoxylated trimethylolpropane triacrylate and has a refractive index of 1.459, a specific gravity of 1.05 g/cm³, a Tg of -15°C, an APHA Color of 30 and a viscosity of 90 cps at 25°C. Sartomer SR-501 is a six mole propoxylated trimethylolpropane triacrylate and has a refractive index of 1.4567, a specific gravity of 1.048 g/cm³, a Tg of -2°C, an APHA Color of 90 and a viscosity of 125 cps at 25°C. Sartomer SR-444 is a pentaerythritol triacrylate and has a refractive index of 1.4801, a specific gravity of 1.162 g/cm³, a Tg of 103°C, an APHA Color of 50 and a viscosity of 520 cps at 25°C. Sartomer SR-454 is a three mole ethoxylated trimethylolpropane triacrylate and has a refractive index of 1.4689, a specific gravity of 1.103 g/cm³, a Tg of 120°C, an APHA Color of 55 and a viscosity of 60 cps at 25°C. Sartomer SR-499 is a six mole ethoxylated trimethylolpropane triacrylate and has a refractive index of 1.4691, a specific gravity of 1.106 g/cm³, a Tg of -8°C, an APHA Color of 50 and a viscosity of 85 cps at 25°C. Sartomer SR-502 is a nine mole ethoxylated trimethylolpropane triacrylate and has a refractive index of 1.4691, a specific gravity of 1.11 g/cm³, a Tg of -19°C, an APHA Color of 140 and a viscosity of 130 cps at 25°C. Sartomer SR-9035 is a fifteen mole ethoxylated trimethylolpropane triacrylate and has a refractive index of 1.4695, a specific gravity of 1.113 g/cm3, a Tg of -32°C, an APHA Color of 60 and a viscosity of 168 cps at 25°C. Sartomer SR-415 is a twenty mole ethoxylated trimethylolpropane triacrylate and has a refractive index of 1.4699, a specific gravity of 1.115 g/cm3, a Tg of -40°C, an APHA Color of 55 and a viscosity of 225 cps at 25°C. EBECRYL 853 is a low viscosity polyester triacrylate and has a specific gravity of 1.10 g/cm3, an APHA Color of 200 and a viscosity of 80 cps at 25°C. EBECRYL 5500 is a low viscosity glycerol derivative triacrylate and has a specific gravity of 1.07 g/cm³, an APHA Color of 62 and a viscosity of 130 cps at 25°C. Other triacrylate, monoacrylate, diacrylate, tetraacrylate and higher functional acrylate monomers, diluting acrylates, and various combinations thereof, can also be used in the ink compositions as vehicles.

In embodiments, one or more components in a mixture may be non-water dilutable, if the ink is water dilutable, and the reactive component are themselves miscible. In the same way that water may be added, in some embodiments, co-reactive monomers may be added to control polarity of the ink. Specific examples of water-dilutable curable components include, but are not limited to, the functional water soluble aromatic urethane acrylate compound (available from CYTEC as EBECRYL® 2003), the di-functional compound polyethylene glycol diacrylate (available from CYTEC as EBECRYL® 11), and the tri-functional compound polyether triacrylate (available from CYTEC as EBECRYL® 12). The monomer or oligomer can be present in any suitable amount compatible with the scope of the present claims. For example, the monomer or oligomer, or combination thereof may be added in an amount of from about 10 to about 85%, or from about 30 to about 80%, or from about 50 to about 70%, by weight based on the total weight of the curable ink composition. Curable oligomers which can be used in the ink compositions as vehicles may include Sartomer CN294E; CN2256; CN2282; CN9014 and CN309. Sartomer CN294E is a tetrafunctional acrylated polyester oligomer. CN294E is a clear liquid having a specific gravity of 0.93 and a viscosity of 4,000 cps at 60°C. Sartomer CN2256 is a difunctional polyester acrylate oligomer and has a refractive index of 1.5062, a Tg of -22°C, a tensile strength of 675 psi, and a viscosity of 11,000 cps at 60°C.

Sartomer CN2282 is tetrafunctional acrylated polyester and is a clear liquid having a specific gravity of 1.15 and a viscosity of 2,500 cps at 60°C. Sartomer CN9014 is a difunctional acrylated urethane and is a non-clear liquid having a specific gravity of 0.93 and a viscosity of 19,000 cps at 60°C. Sartomer CN309 is an oligomer containing an acrylate ester that derives from an aliphatic hydrophobic backbone, or in other words is an aliphatic acrylate ester. CN309 is a clear liquid having a specific gravity of 0.92, a density of 7.68 pounds/gallon, a surface tension of 26.3 dynes/cm, a viscosity of 150 cps at 25°C, and a viscosity of 40 cps at 60°C.

Examples of curable oligomers which can be used in the ink compositions as vehicles may include CN294E, CN2256, CN2282, CN9014 and CN309 from Sartomer; EBECRYL® 8405, EBECRYL® 8411, EBECRYL® 8413, EBECRYL® 8465, EBECRYL® 8701, EBECRYL® 9260, EBECRYL® 546, EBECRYL® 657, EBECRYL® 809, and the like from Allnex. EBECRYL® 8405 is a tetrafunctional urethane acrylate diluted as 80 wt% by weight in 1,6-Hexanediol diacrylate (HDDA). EBECRYL® 8405 is a clear liquid having a Gardner Color of 2 and a viscosity of 4,000 cps at 60°C. EBECRYL® 8411 is a difunctional urethane acrylate diluted as 80 wt% by weight in isobornylacrylate (IBOA). EBECRYL® 8411 is a clear liquid having a viscosity range of 3,400 to 9,500 cps at 65°C. EBECRYL® 8413 is a difunctional urethane acrylate diluted as 67 wt% by weight in IBOA. EBECRYL® 8413 is a clear liquid having a viscosity of 35,000 cps at 60°C. EBECRYL® 8465 is a trifunctional urethane acrylate. EBECRYL® 8465 is a clear liquid having a Gardner Color of 2 and a viscosity of 21,000 cps at 60°C. EBECRYL® 8701 is a trifunctional urethane acrylate. EBECRYL® 8701 is a clear liquid having a Gardner Color of 2 and a viscosity of 4,500 cps at 60°C. EBECRYL® 9260 is a trifunctional urethane acrylate. EBECRYL® 9260 is a clear liquid having a Gardner Color of 2 and a viscosity of 4,000 cps at 60°C. EBECRYL® 546 is a trifunctional polyester acrylate. EBECRYL® 546 is a clear liquid having a Gardner Color of 1.5 and a viscosity of 350,000 cps at 25°C. EBECRYL® 657 is a tetrafunctional polyester acrylate. EBECRYL® 657 is a clear liquid having a Gardner Color of 4 and a viscosity of 125,000 cps at 25°C. EBECRYL® 809 is a trifunctional polyester acrylate. EBECRYL® 809 is a clear liquid having a Gardner Color of 3 and a viscosity of 1,300 cps at 60°C.

### Photoinitiator.

In some embodiments, the present white ink composition includes a photoinitiator, such as a α-hydroxyketone photo-initiator (including α-hydroxyketone photoinitators sold under the trade name IRGACURE® 184, IRGACURE® 500, DAROCUR® 1173, and IRGACURE® 2959, which are manufactured by BASF), α-aminoketone photo-initiators (including α-aminoketone photo-initiators IRGACURE® 369, IRGACURE® 379, IRGACURE® 907, and IRGACURE® 1300, which are manufactured by BASF) and bisacyl phosphine photo-initiators (including bisacyl phospine photo-initiators sold under the trade name IRGACURE® 819, IRGACURE® 819DW, and IRGACURE® 2022, which are manufactured by BASF). Other suitable photo-initiators include monoacylphosphine oxide and bisacylphosphine oxide, such as 2,4,6-trimethylbenzoybiphenylphosphine oxide (manufactured by BASF under the trade name LUCIRIN® TPO); ethyl-2,4,6-trimethylbenzoylphenyl phosphinate (manufactured by BASF under the trade name LUCIRIN® TPO-L); mono- and bis-acylphosphine photoinitiators (such IRGACURE® 1700, IRGACURE® 1800, IRGACURE® 1850, and DAROCUR® 4265, manufactured by BASF), benzyldimethyl-ketal photo-initiators (such as IRGACURE® 651, manufactured by BASF) and oligo[2-hydroxy-2-methyl-1-[4-(1-methylvinyl)phenyl]propanone] (available as Esacure® KIP 150 from Lamberti); and the like, as well as mixtures thereof.

The photoinitiator or mixture of photoinitiators may be present in the white ink composition of the instant disclosure in an amount of about 0% to about 12% by weight, such as about 1% to about 10%, by weight such as about 2% to about 8% by weight, based upon the total weight of the white ink composition.

In some embodiments, the white ink composition of the present disclosure comprises a free radical scavenger, such as IRGASTAB® UV10, IRGASTAB® UV22 available from BASF or CN3216 available from Sartomer Co. The free radical scavenger may be present in the white ink composition in an amount of about 0% to about 5% by weight, such as from about 0.5% to about 4% by weight, such as about 2% to about 3% by weight, based upon the total weight of the present white ink composition.

### Filler.

In some embodiments, the ink composition of the present disclosure includes a filler or fillers. Suitable fillers may include, but are not limited to, amorphous, diatomaceous, fumed quartz and crystalline silica, clays, aluminum silicates, magnesium aluminum silicates, talc, mica, delaminated clays, calcium carbonates and silicates, gypsum, barium sulfate, zinc, calcium zinc molybdates, zinc oxide, phosphosilicates and borosilicates of calcium, barium and strontium, barium metaborate monohydrate, and the like. In specific embodiments, the filler may be clays from Southern Clay Products CLAYTONE® HA and CLAYTONE® HY. In some embodiments, filler may be present in the white ink composition of the present disclosure in an amount from about 0% by weight, such as about 1% to about 20% by weight, such as from about 2% to about 10% by weight, based upon the total weight of the present white ink composition.

The present disclosure further provides a method of digital offset printing, which includes applying the white ink composition of the present disclosure onto a re-imageable imaging member surface, the re-imageable imaging member having dampening fluid disposed thereon; forming an ink image; and transferring the ink image from the re-imageable surface of the imaging member to a printable substrate.

An exemplary digital offset printing architecture is shown in FIG. 1. As seen in FIG. 1, an exemplary system 100 may include an imaging member 110. The imaging member 110 in the embodiment shown in FIG. 1 is a drum, but this exemplary depiction should not be interpreted so as to exclude embodiments wherein the imaging member 110 includes a plate or a belt, or another now known or later developed configuration. The re-imageable surface 110(a) may be formed of materials including, for example, a class of materials commonly referred to as silicones, including flurosilicone, among others. The re-imageable surface may be formed of a relatively thin layer over a mounting layer, a thickness of the relatively thin layer being selected to balance printing or marking performance, durability and manufacturability.

U.S. Patent Application No. 13/095,714 ("714 Application"), entitled "Variable Data Lithography System," filed on April 27, 2011, by Timothy Stowe et al., which is commonly assigned, depicts details of the imaging member 110 including the imaging member 110 being comprised of a re-imageable surface layer 110(a) formed over a structural mounting layer that may be, for example, a cylindrical core, or one or more structural layers over a cylindrical core.

The imaging member 110 is used to apply an ink image to an image receiving media substrate 114 at a transfer nip 112. The transfer nip 112 is formed by an impression roller 118, as part of an image transfer mechanism 160, exerting pressure in the direction of the imaging member 110. Image receiving medium substrate 114 includes, but is not limited to, any particular composition or form such as, for example, paper, plastic, folded paperboard, Kraft paper, clear substrates, metallic substrates or labels. The exemplary system 100 may be used for producing images on a wide variety of image receiving media substrates. The 714 Application also explains the wide latitude of marking (printing) materials that may be used.

The exemplary system 100 includes a dampening fluid system 120 generally comprising a series of rollers, which may be considered as dampening rollers or a dampening unit, for uniformly wetting the re-imageable surface of the imaging member 110 with dampening fluid. A purpose of the dampening fluid system 120 is to deliver a layer of dampening fluid, generally having a uniform and controlled thickness, to the re-imageable surface of the imaging member 110. It is known that a dampening fluid such as fountain solution may comprise mainly water optionally with small amounts of isopropyl alcohol or ethanol added to reduce surface tension as well as to lower evaporation energy necessary to support subsequent laser patterning, as will be described in greater detail below. Small amounts of certain surfactants may be added to the fountain solution as well. Alternatively, other suitable dampening fluids may be used to enhance the performance of ink based digital lithography systems. Exemplary dampening fluids include water, Novec 7600 (1,1,1,2,3,3-Hexafluoro-4-(1,1,2,3,3,3-hexafluoropropoxy)pentane.), and D4 (octamethylcyclotetrasiloxane). Other suitable dampening fluids are disclosed, by way of example, in co-pending U.S. Patent Application 13/284,114, filed on October 28, 2011, titled "Dampening Fluid For Digital Lithographic Printing.

Once the dampening fluid is metered onto the re-imageable surface of the imaging member 110, a thickness of the dampening fluid may be measured using a sensor (not shown) that may provide feedback to control the metering of the dampening fluid onto the re-imageable surface of the imaging member 110 by the dampening fluid system 120.

After a precise and uniform amount of dampening fluid is provided by the dampening fluid system 120 on the re-imageable surface of the imaging member 110, an optical patterning subsystem 130 may be used to selectively form a latent image in the uniform dampening fluid layer by image-wise patterning the dampening fluid layer using, for example, laser energy. Typically, the dampening fluid will not absorb the optical energy (IR or visible) efficiently. The re-imageable surface of the imaging member 110 should ideally absorb most of the laser energy (visible or invisible such as IR) emitted from the optical patterning subsystem 130 close to the surface to minimize energy wasted in heating the dampening fluid and to minimize lateral spreading of heat in order to maintain a high spatial resolution capability. Alternatively, an appropriate radiation sensitive component may be added to the dampening fluid to aid in the absorption of the incident radiant laser energy. While the optical patterning subsystem 130 is described above as being a laser emitter, it should be understood that a variety of different systems may be used to deliver the optical energy to pattern the dampening fluid.

The mechanics at work in the patterning process undertaken by the optical patterning subsystem 130 of the exemplary system 100 are described in detail with reference to FIG. 5 in the 714 Application. Briefly, the application of optical patterning energy from the optical patterning subsystem 130 results in selective removal of portions of the layer of dampening fluid.

Following patterning of the dampening fluid layer by the optical patterning subsystem 130, the patterned layer over the re-imageable surface of the imaging member 110 is presented to an inker subsystem 140. The inker subsystem 140 is used to apply a uniform layer of ink over the layer of dampening fluid and the re-imageable surface layer of the imaging member 110. The inker subsystem 140 may use an anilox roller to meter an offset lithographic ink, such as the white ink compositions of the present disclosure, onto one or more ink forming rollers that are in contact with the re-imageable surface layer of the imaging member 110. Separately, the inker subsystem 140 may include other traditional elements such as a series of metering rollers to provide a precise feed rate of ink to the reimageable surface. The inker subsystem 140 may deposit the ink to the pockets representing the imaged portions of the re-imageable surface, while ink on the unformatted portions of the dampening fluid will not adhere to those portions.

The cohesiveness and viscosity of the ink residing in the re-imageable layer of the imaging member 110 may be modified by a number of mechanisms. One such mechanism may involve the use of a rheology (complex viscoelastic modulus) control subsystem 150. The rheology control system 150 may form a partial crosslinking layer of the ink on the re-imageable surface to, for example, increase ink cohesive strength relative to the re-imageable surface layer. Curing mechanisms may include optical or photo curing, heat curing, drying, or various forms of chemical curing. Cooling may be used to modify rheology as well via multiple physical cooling mechanisms, as well as via chemical cooling.

The ink is then transferred from the re-imageable surface of the imaging member 110 to a substrate of image receiving medium 114 using a transfer subsystem 160. The transfer occurs as the substrate 114 is passed through a nip 112 between the imaging member 110 and an impression roller 118 such that the ink within the voids of the re-imageable surface of the imaging member 110 is brought into physical contact with the substrate 114. With the adhesion of the ink, such as the white ink of the present disclosure, having been modified by the rheology control system 150, modified adhesion of the ink causes the ink to adhere to the substrate 114 and to separate from the re-imageable surface of the imaging member 110. Careful control of the temperature and pressure conditions at the transfer nip 112 may allow transfer efficiencies for the ink, such as the white ink of the present disclosure, from the re-imageable surface of the imaging member 110 to the substrate 114 to exceed 95%. While it is possible that some dampening fluid may also wet substrate 114, the volume of such a dampening fluid may be minimal, and may rapidly evaporate or be absorbed by the substrate 114.

In certain offset lithographic systems, it should be recognized that an offset roller, not shown in FIG.1, may first receive the ink image pattern and then transfer the ink image pattern to a substrate according to a known indirect transfer method.

Following the transfer of the majority of the ink to the substrate 114, any residual ink and/or residual dampening fluid may be removed from the re-imageable surface of the imaging member 110, typically without scraping or wearing that surface. An air knife may be employed to remove residual dampening fluid. It is anticipated, however, that some amount of ink residue may remain. Removal of such remaining ink residue may be accomplished through use of some form of cleaning subsystem 170. The 714 Application describes details of such a cleaning subsystem 170 including at least a first cleaning member such as a sticky or tacky member in physical contact with the re-imageable surface of the imaging member 110, the sticky or tacky member removing residual ink and any remaining small amounts of surfactant compounds from the dampening fluid of the re-imageable surface of the imaging member 110. The sticky or tacky member may then be brought into contact with a smooth roller to which residual ink may be transferred from the sticky or tacky member, the ink being subsequently stripped from the smooth roller by, for example, a doctor blade.

The 714 Application details other mechanisms by which cleaning of the re-imageable surface of the imaging member 110 may be facilitated. Regardless of the cleaning mechanism, however, cleaning of the residual ink and dampening fluid from the re-imageable surface of the imaging member 110 may be used to prevent ghosting in the system. Once cleaned, the re-imageable surface of the imaging member 110 is again presented to the dampening fluid system 120 by which a fresh layer of dampening fluid is supplied to the re-imageable surface of the imaging member 110, and the process is repeated.

In embodiments, a digital offset printing process involves the transfer of a pigmented UV (ultra violet) curable ink onto a fluorosilicone printing plate which has been partially coated with a release agent or fountain solution, such as is commercially sold as D4. The ink is then optionally subjected to partial cure using UV light and transferred from the plate to the object, which can be made from paper, plastic or metal, being printed. The ink on the object is again exposed to UV light for final curing of the ink.

In order to meet digital offset printing requirements, the ink desirably possesses many physical and chemical properties. The ink is desirably compatible with materials it is in contact with, including printing plate, fountain solution, and other cured or non-cured inks. It also desirably meets functional requirements of the sub-systems, including wetting and transfer properties. Transfer of the imaged inks is challenging, as the ink desirably possesses the combination of wetting and transfer traits, that is, the ink desirably at once wets the blanket material homogeneously, and transfers from the blanket to the substrate. Transfer of the image layer is desirably efficient, desirably at least as high as 90%, as the cleaning sub-station can only eliminate small amounts of residual ink. Any ink remaining on the blanket after cleaning can result in an unacceptable ghost image appearing in subsequent prints. Not surprisingly, ink rheology can play a key role in the transfer characteristics of an ink.

Partial cure of the ink on the blanket (see Figure 1 above) was investigated in the past as a way to control the ink rheology prior to transfer to substrate. While this approach did work reasonably well, the robustness of the process and impact on the blanket life limited its application.

An alternative approach was proposed which involved delivering the inks at high temperature and then cooling down the ink layer on the imaging cylinder before transfer. A number of experiments were conducted with inks having different rheological characteristics at high and low temperature and also at high (100 rad/s) and low shear rates (1 rad/s). A range of low and high temperatures were explored in order to identify optimum conditions for transfer at high speed (1 m/s).

It was found that both the temperature and temperature difference between the blanket and the substrate is an important variable with respect to image transfer. Heating of the inker unit to from about 60 °C to about 70 °C, coupled with cooling of the central imaging cylinder to from about 15°C to about 20°C results in very efficient ink delivery and image transfer with little or no residual ink remaining on the blanket. Using a heated inker unit to maximize the difference in ink rheology for the imaging and transfer step, results in the need for higher viscosity inks than what had been used previously which was η ∼ 100,000 to η > 200,000 mPa.s, as measured at 25°C at a shear rate of 1 rad/sec.

The ink composition in accordance with the present disclosure is not limited to use in digital offset printing. The ink composition disclosed herein may also be useful in conventional offset printing or hybrid conventional offset and digital offset printing systems. Nonetheless, the ink compositions of the present disclosure meet systems requirements that are unique to digital offset printing systems. In particular, the present ink compositions satisfy wetting and release requirements imposed by the re-imageable imaging member of ink-based digital printing systems. Further, the ink compositions of the present disclosure are compatible with dampening fluids suitable for ink-based digital printing, including nonaqueous dampening fluids. The ink compositions of the present disclosure are also enabled for transfer from an ink delivery system such as anilox roll to the imaging member, e.g., re-imageable offset plate. In embodiments, the ink compositions of the present disclosure provide a desired combination of ink characteristics including 1) a relatively low viscosity at a desired temperature, in embodiments, at a temperature of from about 45 °C to about 80 °C, and relatively higher shear to allow the continual and uniform loading of ink from the ink loader system to the anilox roller; and 2) a relatively high viscosity at a desired temperature, in embodiments at a temperature of from about 18° to about 30°C, and relatively lower shear rate. These conditions and combination of ink characteristics allow improved take-up of ink from the anilox roller to the blanket resulting in better imaging density uniformity, better printed dot circularity and better transfer from the blanket to the receiving substrate, such as paper.

In embodiments a process of digital offset printing herein comprises applying an composition as described herein onto a re-imageable imaging member surface at an ink take up temperature, the re-imageable imaging member having dampening fluid disposed thereon; forming an ink image; transferring the ink image from the re-imageable surface of the imaging member to a printable substrate at an ink transfer temperature; wherein the ink composition comprises: a white colorant, a translucent colorant, or a combination thereof; at least one component selected from the group consisting of a curable monomer and a curable oligomer; at least one phase change agent, wherein the phase change agent has the characteristic of providing the ink composition with a first lower viscosity at an ink take up temperature and a second higher viscosity at an ink transfer temperature wherein the ink take up temperature is higher than the ink transfer temperature.; an optional dispersant; and an optional photoinitiator. In embodiments, applying the ink composition comprises applying the ink composition using an anilox delivery system. In certain embodiments, applying the ink composition comprises applying the ink composition to form an undercoat.

Any suitable substrate, recording sheet, or removable support, stage, platform, and the like, can be employed for depositing the ink compositions herein, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, glossy coated papers such as XEROX® Digital Color Gloss, Sappi Warren Papers LUSTROGLOSS®, and the like, transparency materials, fabrics, textile products, plastics, polymeric films, glass, glass plate, inorganic substrates such as metals and wood, as well as meltable or dissolvable substrates, such as waxes or salts, in the case of removable supports for free standing objects, and the like. In certain embodiments, the substrate is selected from the group consisting of paper, plastic, folded paperboard, Kraft paper, and metal. In a specific embodiments, the substrate is a label. The label can be selected from any of the aforementioned types of substrate. In certain embodiments, the ink compositions herein form an undercoat.

### EXAMPLES

The following Examples are being submitted to further define various species of the present disclosure. These Examples are intended to be illustrative only and are not intended to limit the scope of the present disclosure. Also, parts and percentages are by weight unless otherwise indicated.

### Example 1

### Gelator Example 1.

### Step 1: Preparation of the organoamide (ETPA amide gellant precursor) n=3 hydrophobic tails on average.

A baseline amide gellant precursor using a EDA:Pripol™ ratio of 1.125:2 was prepared as follows. To a 2L stainless steel reactor equipped with baffles and 4-blade impeller was added Pripol™ 1009 dimer diacid (Cognis Corporation) (703.1g, acid number=194mg/g, 1215mmol). The reactor was purged with argon and heated to 90° C, and the impeller was turned on to 400RPM. Next, ethylenediamine (Huntsman Chemical Corporation, 21.9g, 364mmol) was slowly added through a feed line directly into the reactor over 15 minutes. The reactor temperature was set to 95° C. Next, the reactor temperature was ramped up to 165 °C over 280 minutes, and held at 165° C for 1 hour. Finally, the molten organoamide product was discharged into a foil pan and allowed to cool to room temperature. The product was an amber-coloured solid resin. Acid#: 133.7.

### Step 2: Preparation of ETPA Amide gellant from organoamide (average of 3 hydrophobic tails).

Preparation of the amide gellant (baseline). A baseline amide gellant precursor using a EDA:Pripol™ ratio of 1.125:2 was prepared as follows. To a 2L stainless steel Buchi reactor equipped with 4-blade steel impeller, baffle, and condenser was added organoamide (711.8 g, acid number=133.7, 614.65 mmol) via the addition port, using a heat gun to melt the materials. Next, the reactor was purged with N₂ gas at 3 SCFH (standard cubic feet per hour) flow rate, and heated to 210° C, and mixing at 450RPM was started. Next, 2-phenoxyethanol (281.2g, 2035.4 mmol, Aldrich Chemicals) and Fascat 4100 (0.70 g, 2.05 mmol, Arkema Inc.) were premixed in a beaker, and added to the reaction. The reaction port was closed, and the reaction was held at 210° C for 2.5 hours. After 2.5 hours, the reactor port was opened, and 27.5g more phenoxyethanol was added, and the reaction was allowed to run for 4 hours. After the reaction was completed, the molten gellant product was discharged into a foil pan and allowed to cool to room temperature. The produce was an amber-colored firm gel. Acid number=3.9.

### Example 2

### Gelator Example 2.

### Preparation of the amide gellant precursor (low molecular weight) (average of 2 hydrophobic tails).

### Step 1.

A low molecular weight amide gellant precursor using a EDA:Pripol™ ratio of 0.25:2 was prepared as follows. To a 1L kettle equipped with PTFE paddle, dropping funnel, Dean-Stark trap, reflux condenser and thermocouple probe was added Pripol™ 1009 (dimer diacid, Cognis Corporation) (454.27 g, acid number=194mg/g, 785 mmol). The kettle was purged with argon and heated to 90°C with stirring. Next, ethylenediamine (Huntsman Chemical Corporation, 6.55 ml, 98 mmol) was added to the dropping funnel and slowly added to the Pripol™ dropwise over 5-10 minutes. The kettle was gradually heated up 150° C, and finally to 180° C, and held for 4-5 hours. After the reaction was completed, the molten organoamide product was discharged into a foil pan and allowed to cool to room temperature. The product was an amber-colored viscous gum. Acid number = 168.72.

### Step 2: Preparation of low Mw ETPA Amide gellant from organoamide (average of 2 hydrophobic tails).

A low molecular weight amide gellant precursor using a EDA:Pripol™ ratio of 0.25:2 was prepared as follows. To a 2L s/s Buchi reactor equipped with 4-blade steel impeller, baffle, condenser was added organoamide (423.4 g, 636 mmol) via the addition port, using a heat gun to melt the materials. Next, the reactor was purged with N2 @ 3 SCFH (standard cubic feet per hour) flow rate, and heated to 165° C. Next, 2-phenoxyethanol (191 ml, 1527 mmol, Aldrich Chemicals) and Fascat 4100 (.45 g, 2.155 mmol) were premixed in a beaker, and added to the reaction. The reaction port was closed, and ramped to 210° C and held for 7h. After 3 hours of reaction time, the reactor port was opened, and 22mL more phenoxyethanol was added. After the reaction was completed, the molten gellant product was discharged into a foil pan and allowed to cool to room temperature. The produce was a soft, amber-coloured rubbery jelly. Acid number=0.65.

### General procedure for DALI ink preparation.

Based on a 150 gram total scale of preparation of the ink, the first set of ink base components (including the dispersant, monomer, oligomer, gellant (when used), thermal stabilizer and photoinitiators) were added in a 250 mL stainless steel vessel. The vessel was placed on a hotplate available from IKA® equipped with a thermocouple and stirrer apparatus also available from IKA® and with an anchor impeller. The components in the vessel were stirred at about 200 RPM for about 30 minutes at about 80 °C until the photoinitiators were molten and the mixture looks homogenous. Then the pigment and clay components, were added slowly with stirring at about 80 °C which continued for about another 30 minutes. When the solids, pigment and clay were fully incorporated into the ink vehicle, the mixture was finally mixed for an hour at 1000 rpm also at 80 °C. The thoroughly mixed component mixture was then qualitatively transferred to a 3-roll mill apparatus manufactured by Kent Machine Works where the material composite paste was passed 3 times through the 3-roll mill. The ink component types and quantities in each of the Comparative Examples can be established from Table 2.

Tables 1 and 2 summarize the list of components in Comparative Example and Example inks' compositions by weight.

**Table 1**

| **Ink formulation** | | |
|---|---|---|
| **Component** | | **Available from** |
| **Pigment** | Ti-Pure® R706 | DuPont |
| **Dispersant** | K-Sperse® XDA-504 | King Industries |
| **Oligomers** | CN294E® | Sartomer Company |
| | CN9014® | Sartomer Company |
| **Monomer** | SR501® | Sartomer Company |
| • **Photoinitiator** | IRGACURE® 379 | BASF |
| | IRGACURE® 819 | BASF |
| | ESACURE® KIP 150 | Lamberti Technologies |
| | IRGACURE® 184 | BASF |
| **Thermal stabilizer** | CN3216® | Sartomer Company |
| **Filler** | CLAYTONE® HY | Southern Clay Products |
| **Gelator** | Example 1 Gelator | Xerox Corporation |
| | Example 2 Gelator | Xerox Corporation |

**Table 2**

| **Component (Wt%)** | **Example 1** | **Example 2** | **Example 3** |
|---|---|---|---|
| Ti-Pure® R706 | 60 | 60 | 60 |
| Claytone® HY | 1.33 | 1.33 | 1.33 |
| K-Sperse® XDA-504 | 5.33 | 5.33 | 5.33 |
| SR501® | 3.33 | 3.33 | 3.33 |
| CN294E® | 19.33 | 18.67 | 15.33 |
| CN9014® | 4.67 | 4.67 | 4.67 |
| Irgacure® 379 | 1.67 | 1.67 | 1.67 |
| Irgacure® 819 | 0.33 | 0.33 | 0.33 |
| Esacure® KIP 150 | 2.67 | 2.67 | 2.67 |
| Irgacure® 184 | 0.67 | 0.67 | 0.67 |
| CN3216® | 0.67 | 0.67 | 0.67 |
| Gellant (Example 2) | 0 | 0.67 | 4 |
| TOTAL | 100 | 100 | 100 |

### Rheology of Inks.

The rheological properties of the radiation curable inks of the present invention were obtained on a Rheometric Scientific RFS-3 rheometer (TA Instruments) using a 25 mm parallel plate geometry as per following measurement protocol:
Frequency sweeps performed between at 25 °C between 0.1 and 100 rad/s.
25 mm plate.
Temperature sweeps at 1 rad/s from 60 to 18 °C.

The complex viscosity profiles of the various inks were determined at 25 °C, a standard protocol used for DALI inks. The targeted rheology values for the inks containing gellant should be between 200,000 and 1,000,000 mPa.s at 0.1 rad/s at 25 °C or below (where the transfer on the blanket occurs) and within range of 3,000 to 30,000 mPa.s at 100 rad/s (where the anilox take-up happens).

Table 3 summarizes the viscosity characteristics of interest: viscosity at 60 °C, 100 rad/s and viscosity at 25 °C, 1 rad/s.

**Table 3**

| **Ink Example** | **Comparative Example 1** | **Example 2** | **Example 3** |
|---|---|---|---|
| **Pigment loading wt%** | 60 | 60 | 60 |
| **Gellant content wt%** | 0 | 0.67 | 4 |
| **Clay content wt%** | 1.33 | 1.33 | 1.33 |
| **Viscosity (mPa/s) at 60 ° C (100rad/s) for anilox take-up** | 9.03x10³ | 8.33x10³ | 8.56x10³ |
| **Viscosity (mPa/s) at 25 ° C (1rad/s) for blanket transfer** | 2.37x10⁵ | 1.34x10⁵ | 8.46x10⁵ |

Table 3 highlights the advantages of adding a gelator, which include a preferential and marked increase in the system viscosity of the ink of Example 3 over the ink of Comparative Example 1 at 25 °C. Also, comparing the viscosity of the ink of Example 2 with the lowest amount of gellant a slight dip in the viscosity at 25 °C is observed when compared to the control ink without gellant (Comparative Example 1) and the ink with 4 wt% gellant (Example 3). This was an unexpected result. It is also observed that the viscosity at 60 °C remains largely unaffected by the addition of the gellant. Inks containing phase change agents, such as diamide gelators, can therefore be successfully formulated such as to afford inks with good flow characteristics at anilox take-up substation at 60 °C with also good flow during the transfer of ink from anilox roller to blanket (imaging step), with simultaneous rapid cooling on contact with cooled blanket and finally ink transfer to the paper or substrate at lower temperature. In embodiments, the inks herein allow printing speed of 1 m/s or higher.

The ink compositions of the present embodiments provide a desired ink transfer split which is quantified by chase pages to clean transfer plate. The Comparative Example without the phase change additive required 6 or 8 chase pages while the ink Examples of the present embodiments required only 2 or 3 chase pages.

Thus, a white ink composition for use in digital offset printing provides, in embodiments: A high viscosity, in embodiments containing greater than 50 weight percent inorganic pigment loading, based on the total weight of the ink composition, in embodiments, the ink composition comprising a white colorant, in embodiments, TiO₂, a dispersant, monomer, oligomer, single or mixed system free radical photoinitiator, organoclay or silica filler, thermal stabilizer, an ester-terminated polyamide gelator, the ink having a relatively low viscosity at relatively higher temperatures such as about 50 °C and higher.

It will be appreciated that various of the above-disclosed and other features and functions, or alternatives thereof, may be desirably combined into many other different systems or applications.

## Claims

1. An ink composition for use in digital offset printing, comprising:
a white colorant, a translucent colorant, or a combination thereof;
wherein the white colorant, translucent colorant, or combination thereof is present in an amount of at least 50 percent by weight based upon the total weight of the ink composition;
at least one component selected from the group consisting of a curable monomer and a curable oligomer;
at least one phase change agent;
an optional dispersant; and
an optional photoinitiator,
wherein the at least one phase change agent comprises an ester-terminated polyamide gellant.

2. The ink composition of Claim 1, wherein the ink composition has a first viscosity of from about 3,000 to about 90,000 mPa·s (centipoise) at an ink take up temperature of from about 45 °C to about 80 °C and a relatively higher shear rate of from about 50 rad/s to about 200 rad/s; and
wherein the ink composition has a second viscosity of from about 100,000 to about 2,000,000 mPa·s (centipoise) at an ink transfer temperature of from about 18 °C to about 30 °C and a relatively lower shear rate of from about 0.5 rad/s to about 2 rad/s.

3. The ink composition of Claim 1, wherein the colorant is a white colorant present in an amount of greater than 50 percent by weight to about 85 percent by weight, based upon the total weight of the ink composition.

4. A process of digital offset printing, the process comprising:
applying an ink composition onto a re-imageable imaging member surface at an ink take up temperature, the re-imageable imaging member having dampening fluid disposed thereon;
forming an ink image;
transferring the ink image from the re-imageable surface of the imaging member to a printable substrate at an ink transfer temperature;
wherein the ink composition comprises:
a white colorant, a translucent colorant, or a combination thereof;
wherein the white colorant, translucent colorant, or combination thereof is present in an amount of at least 50 percent by weight based upon the total weight of the ink composition;
at least one component selected from the group consisting of a curable monomer and a curable oligomer;
at least one phase change agent, wherein the phase change agent has the characteristic of providing the ink composition with a first lower viscosity at an ink take up temperature and a second higher viscosity at an ink transfer temperature wherein the ink take up temperature is higher than the ink transfer temperature.;
an optional dispersant; and
an optional photoinitiator,
wherein the at least one phase change agent comprises an ester-terminated polyamide gellant.

5. The process of Claim 4, wherein the ink composition has a first viscosity of from about 3,000 to about 90,000 mPa·s (centipoise) at an ink take up temperature of from about 45 °C to about 80 °C and a relatively higher shear rate of from about 50 rad/s to about 200 rad/s; and
wherein the ink composition has a second viscosity of from about 100,000 to about 2,000,000 mPa·s (centipoise) at an ink transfer temperature of from about 18 °C to about 30 °C and a relatively lower shear rate of from about 0.5 rad/s to about 2 rad/s.

6. The process of Claim 4, wherein the colorant is a white colorant present in an amount of greater than 50 percent by weight to about 85 percent by weight, based upon the total weight of the ink composition.

7. The process of Claim 4, further comprising:
a non-white colorant.

8. The process of Claim 4, wherein the colorant is selected from the group consisting of titanium dioxide, rutile, zinc oxide, zinc sulfide, calcium carbonate, clay, lithopone (a mixture of barium sulphate and zinc sulfide), and combinations thereof.

## Patentansprüche

1. Tintenzusammensetzung zur Verwendung beim digitalen Offsetdrucken mit:
einem weißen Farbmittel, einem durchscheinenden Farbmittel, oder einer Kombination davon;
wobei das weiße Farbmittel, das durchscheinende Farbmittel oder die Kombination davon mit einem Anteil von mindestens 50 Gew.-% basierend auf dem Gesamtgewicht der Tintenzusammensetzung vorhanden ist;
mindestens einer Komponente, die ausgewählt ist aus der Gruppe, die aus einem aushärtbaren Monomer und einem aushärtbaren Oligomer besteht;
mindestens einem Phasenänderungsmittel;
einem optionalen Dispersionsmittel; und
einem optionalen Fotoinitiator,
wobei das mindestens eine Phasenänderungsmittel ein Ester-terminiertes Polyamid-Geliermittel umfasst.

2. Tintenzusammensetzung nach Anspruch 1, wobei die Tintenzusammensetzung eine erste Viskosität von ungefähr 3000 bis ungefähr 90000 mPa·s (Centipoise) bei einer Tintenaufnahmetemperatur von ungefähr 45°C bis ungefähr 80°C und eine relativ höhere Scherungsrate von ungefähr 50 Rad/s bis ungefähr 200 Rad/s hat; und
wobei die Tintenzusammensetzung eine zweite Viskosität von ungefähr 100000 bis ungefähr 2000000 mPa·s (Centipoise) bei einer Tintentransfertemperatur von ungefähr 18°C bis ungefähr 30°C und eine relativ niedrigere Scherungsrate von ungefähr 0,5 Rad/s bis ungefähr 2 Rad/s hat.

3. Tintenzusammensetzung nach Anspruch 1, wobei das Farbmittel ein weißes Farbmittel ist, das mit einem Anteil von größer als 50 Gew.-% bis ungefähr 85 Gew.-% basierend auf dem Gesamtgewicht der Tintenzusammensetzung vorhanden ist.

4. Prozess zum digitalen Offsetdrucken, wobei der Prozess umfasst:
Aufbringen einer Tintenzusammensetzung auf eine wiederverwendbare Abbildungselementoberfläche mit einer Tintenaufnahmetemperatur, wobei das wiederverwendbare Abbildungselement ein darauf angeordnetes Dämpfungsfluid aufweist;
Erzeugen eines Tintenbildes;
Übertragen des Tintenbildes von der wiederverwendbaren Oberfläche des Abbildungselements auf einen bedruckbaren Träger bei einer Tintentransfertemperatur;
wobei die Tintenzusammensetzung umfasst:
ein weißes Farbmittel, ein durchscheinendes Farbmittel oder eine Kombination davon;
wobei das weiße Farbmittel, das durchscheinende Farbmittel oder die Kombination davon mit einem Anteil von mindestens 50 Gew.-% basierend auf dem Gesamtgewicht der Tintenzusammensetzung vorhanden ist;
mindestens eine Komponente, die aus der Gruppe ausgewählt ist, die aus einem aushärtbaren Monomer und einem aushärtbaren Oligomer besteht;
mindestens ein Phasenänderungsmittel, wobei das Phasenänderungsmittel die Eigenschaft hat, dass sie die Tintenzusammensetzung mit einer ersten niedrigeren Viskosität bei einer Tintenaufnahmetemperatur und einer zweiten höheren Viskosität bei einer Tintentransfertemperatur versieht, wobei die Tintenaufnahmetemperatur höher ist als die Tintentransfertemperatur;
ein optionales Dispersionsmittel; und
einen optionalen Fotoinitiator,
wobei das mindestens eine Phasenänderungsmittel ein Ester-terminiertes Polyamid-Geliermittel umfasst.

5. Prozess nach Anspruch 4, wobei die Tintenzusammensetzung eine erste Viskosität von ungefähr 3000 bis ungefähr 90000 mPa·s (Centipoise) bei einer Tintenaufnahmetemperatur von ungefähr 45°C bis ungefähr 80°C und eine relativ höhere Scherungsrate von ungefähr 50 Rad/s bis ungefähr 200 Rad/s hat; und
wobei die Tintenzusammensetzung eine zweite Viskosität von ungefähr 100000 bis ungefähr 2000000 mPa·s (Centipoise) bei einer Tintentransfertemperatur von ungefähr 18°C bis ungefähr 30°C und eine relativ niedrigere Scherungsrate von ungefähr 0,5 Rad/s bis ungefähr 2 Rad/s hat.

6. Prozess nach Anspruch 4, wobei das Farbmittel ein weißes Farbmittel ist, das mit einem Anteil von mehr als 50 Gew.-% bis ungefähr 85 Gew.-% basierend auf dem Gesamtgewicht der Tintenzusammensetzung vorhanden ist.

7. Prozess nach Anspruch 4, der ferner umfasst: ein nicht-weißes Farbmittel.

8. Prozess nach Anspruch 4, wobei das Farbmittel ausgewählt ist aus der Gruppe bestehend aus: Titandioxid, Rutil, Zinkoxid, Zinksulfid, Kalziumcarbonat, Ton, Lithopon (eine Mischung aus Bariumsulfat und Zinksulfid), und Kombinationen davon.

## Revendications

1. Composition d'encre destinée à être utilisée dans l'impression offset numérique, comprenant :
un colorant blanc, un colorant translucide, ou une combinaison de ceux-ci ;
dans laquelle le colorant blanc, le colorant translucide, ou leur combinaison est présent (e) en une quantité d'au moins 50 % en poids sur la base du poids total de la composition d'encre ;
au moins un composant choisi dans le groupe constitué par un monomère durcissable et un oligomère durcissable ;
au moins un agent à changement de phase ;
un dispersant facultatif ; et
un photoinitiateur facultatif,
dans laquelle ledit au moins agent à changement de phase comprend un gélifiant polyamide à terminaisons ester.

2. Composition d'encre selon la revendication 1, dans laquelle la composition d'encre a une première viscosité d'environ 3 000 à environ 90 000 mPa.s (centipoises) à une température d'encrage d'environ 45 à environ 80 °C et un taux de cisaillement relativement supérieur d'environ 50 à environ 200 rad/s ; et
dans laquelle la composition d'encre a une seconde viscosité d'environ 100 000 à environ 2 000 000 mPa.s (centipoises) à une température de transfert d'encre d'environ 18 à environ 30 °C et un taux de cisaillement relativement inférieur d'environ 0,5 à environ 2 rad/s.

3. Composition d'encre selon la revendication 1, dans laquelle le colorant est un colorant blanc présent en une quantité supérieure à 50 % en poids à environ 85 % en poids, sur la base du poids total de la composition d'encre.

4. Procédé d'impression offset numérique, où le procédé comprend :
l'application d'une composition d'encre sur une surface de l'élément d'imagerie ré-imageable à une température d'encrage, où l'élément d'imagerie ré-imageable porte un fluide de mouillage sur sa surface ;
la formation d'une image d'encre ;
le transfert de l'image d'encre depuis la surface ré-imageable de l'élément d'imagerie vers un substrat imprimable à une température de transfert d'encre ;
dans lequel la composition d'encre comprend :
un colorant blanc, un colorant translucide, ou une combinaison de ceux-ci ;
dans lequel le colorant blanc, le colorant translucide, ou leur combinaison est présent (e) en une quantité d'au moins 50 % en poids sur la base du poids total de la composition d'encre ;
au moins un composant choisi dans le groupe constitué par un monomère durcissable et un oligomère durcissable ;
au moins un agent à changement de phase, où l'agent à changement de phase présente la caractéristique de conférer à la composition d'encre une première viscosité, inférieure, à une température d'encrage et une seconde viscosité, supérieure, à une température de transfert d'encre où la température d'encrage est supérieure à la température de transfert d'encre ;
un dispersant facultatif ; et
un photoinitiateur facultatif,
dans lequel ledit au moins agent à changement de phase comprend un gélifiant polyamide à terminaisons ester.

5. Procédé selon la revendication 4, dans lequel la composition d'encre a une première viscosité d'environ 3 000 à environ 90 000 mPa.s (centipoises) à une température d'encrage d'environ 45 à environ 80 °C et un taux de cisaillement relativement supérieur d'environ 50 à environ 200 rad/s ; et
dans lequel la composition d'encre a une seconde viscosité d'environ 100 000 à environ 2 000 000 mPa.s (centipoises) à une température de transfert d'encre d'environ 18 à environ 30 °C et un taux de cisaillement relativement inférieur d'environ 0,5 à environ 2 rad/s.

6. Procédé selon la revendication 4, dans lequel le colorant est un colorant blanc présent en une quantité supérieure à 50 % en poids à environ 85 % en poids, sur la base du poids total de la composition d'encre.

7. Procédé selon la revendication 4, comprenant en outre :
un colorant non blanc.

8. Procédé selon la revendication 4, dans lequel le colorant est choisi dans le groupe constitué par le dioxyde de titane, le rutile, l'oxyde de zinc, le sulfure de zinc, le carbonate de calcium, l'argile, le lithopone (mélange de sulfate de baryum et de sulfure de zinc), et leurs combinaisons.
